# EUROPÄISCHE PATENTSCHRIFT

(11) **EP 1 328 391 B1**
(45) Veröffentlichungstag und Bekanntmachung des Hinweises auf die Patenterteilung: **16.02.2005**
(21) Anmeldenummer: 01987709.1
(22) Anmeldetag: 16.10.2001
(51) Int. Cl.: B29C 45/64, B29C 45/17

(54) **VORRICHTUNG ZUR KOMPENSATION VON VERKANTUNGEN BEI FORMSCHLIESSEINHEITEN VON SPRITZGIESSMASCHINEN**
DEVICE FOR COMPENSATING TILTING IN MOULD CLAMPING UNITS OF INJECTION MOULDING MACHINES
DISPOSITIF DE COMPENSATION DE GAUCHISSEMENTS DANS LE CAS D'UNITES DE FERMETURE DU MOULE DE PRESSES D'INJECTION

(30) Priorität: 19.10.2000 DE 10051837
(43) Veröffentlichungstag der Anmeldung: 23.07.2003
(73) Patentinhaber: Krauss-Maffei Kunststofftechnik GmbH, 80997 München (DE)
(72) Erfinder: HECHTL, Wolfgang, 80798 München (DE); KRALLMANN, Heinz, 32120 Hiddenhausen (DE); FISCHER, Stephan, 32120 Hiddenhausen (DE)
(74) Vertreter: Wilhelm, Ludwig, Dipl.-Phys.
(86) Internationale Anmeldenummer: PCT/EP2001/011919
(87) Internationale Veröffentlichungsnummer: WO 2002/032648

(56) Entgegenhaltungen:
- EP-A- 0 188 755
- DE-A- 19 511 808
- DE-U- 9 409 135
- US-A- 5 780 068
- US-A- 5 800 843
- PATENT ABSTRACTS OF JAPAN vol. 1998, no. 13, 30. November 1998 (1998-11-30) & JP 10 217302 A (TOSHIBA MACH CO LTD), 18. August 1998 (1998-08-18)

## Beschreibung

Die Erfindung betrifft eine Vorrichtung zur Kompensation von Verkantungen bei Formschließeinheiten von Spritzgießmaschinen gemäß dem Oberbegriff von Patentanspruch 1.

Bei der aus der DE 20 28 009 A bekannten Vorrichtung sind zwischen einer Formhälfte und einem als Formaufspannplatte dienenden Schwenkarm zwei flexible Platten vorgesehen, die an ihren Rändern dichtend miteinander verbunden sind und deren eingeschlossener Hohlraum über einen geeigneten Anschluss mit einem Druckmedium beaufschlagbar ist. Die beiden flexiblen Platten stützen sich mit ihrer Außenfläche gegen zwei feste Platten ab, von denen die eine an einem die Formhälfte tragenden Formhälftenlager und die andere an einem auf dem Schwenkarm befestigten Träger anliegt. Dieser Träger verfügt über lotrecht nach außen weisende Stege, die von passenden lotrecht nach innen weisenden Stegen des Formhälftenlagers hintergriffen werden. Bei Beaufschlagung des Hohlraums mit dem Druckmedium werden die lotrechten Stege des Formhälftenlagers fest gegen die Gegenstege des schwenkarmseitigen Trägers angepresst. Etwaige Parallelitätsverschiebungen der miteinander korrespondierenden Formhälften werden unmittelbar von den Platten durch Verdrängung des Druckmediums aufgenommen. Mittels geeigneter Distanzplatten zwischen den lotrecht nach innen weisenden Stegen des Formhälftenlagers und der diesen gegenüberliegenden Außenfläche des Trägers kann die auf dem Schwenkarm befestigte Formhälfte gegenüber der anderen Formhälfte genau axial fluchtend ausgerichtet werden. Nachteilig an dieser Ausgleichsvorrichtung ist zum Einen der Aufwand zum Abdichten des vergleichsweise großflächigen Hohlraums und zum anderen ist es erforderlich, eine Anschlussmöglichkeit vorzusehen, um das Druckmedium aus einem Vorratsbehälter zuzuführen.

Um die mit einem flüssigen Druckmedium einhergehenden Probleme zu vermeiden, ist es weiterhin bekannt (DE 196 09 568 C2), eine Vielzahl von Stahlkugeln zwei- oder mehrlagig in einer mittels einer Druckausgleichsplatte abgeschlossenen Kammer unter Vorspannung einzuschließen, wobei die Druckausgleichsplatte und die Kammer sich jeweils gegen anliegende, druckbeaufschlagt Maschinenteile abstützen, derart, dass bei Druckbeaufschlagung der Maschinenteile die Druckausgleichsplatte sich jeweils so einstellt, dass über ihre gesamte Fläche immer der gleiche spezifische Druck vorhanden ist. Damit sich die Kugeln in der Kammer leicht umverteilen und sich den durch Verkantungen bedingten Volumenänderungen gut anpassen können, wird Trockengraphit hinzugegeben. Nachteilig an dieser Ausgleichsvorrichtung ist, dass Kugeln generell Punktberührung haben, d.h. nur eine geringe Flächenpressung ist gegeben. Mit den Kugeln muss daher eine wesentlich größere Fläche beaufschlagt werden als für die Flächenpressung erforderlich ist. Beim Schließkraftaufbau werden die Kugeln ineinander gedrückt und drücken sich zusätzlich in die Oberfläche der Kammer. Beim Öffnen und Schließen des Werkzeugs tritt außerdem ein Pumpeffekt durch Umverteilung der Kugeln auf, der einen erhöhten Verschleiß für die Kugeln bedeutet. Daher ist die auch Formeinbauhöhe nicht exakt bestimmbar. Insgesamt leidet durch diese Unzulänglichkeiten die Exaktheit des Winkelversatzausgleichs sowie die Erhaltung dieser Exaktheit während des Betriebs. Zum Spritzprägen ist diese Vorrichtung generell nicht geeignet, da der Prägehub nicht exakt einstellbar ist.

Es ist weiterhin bekannt (DE 195 11 808 C2), bei einer holmlosen Formschließeinrichtung die bei der Schließkrafteinwirkung auftretenden Verformungen des C-förmigen Maschinenrahmens auf der Seite der beweglichen Formaufspannplatte dadurch auszugleichen, dass die Kolbenstange eines Arbeitszylinders mit der beweglichen Formaufspannplatte über ein als Kalottenlager ausgebildetes Gelenk verbunden wird. Die Kolbenstange des Arbeitszylinders besitzt am Ende eine Ringnut, an die sich stirnseitig ein sphärischer Gelenkkopf anschließt. In der beweglichen Werkzeugaufspannplatte befindet sich eine passende kalottenförmige Ausnehmung. Der sphärische Gelenkkopf der Kolbenstange des Arbeitszylinders liegt an der kalottenförmigen Ausnehmung an, ist darin drehbeweglich und ist durch einen geteilten Ringflansch und eine Schraubverbindung mit der beweglichen Formaufspannplatte lösbar verbunden. Auf diese Weise kann sich die bewegliche Formaufspannplatte gegenüber der Kolbenstange und damit gegenüber dem Maschinenrahmen bei jedem Schließvorgang so verkippen und ausrichten, dass die beiden Formaufspannplatten und die darauf aufgespannten Formhälften trotz der Verformung des Maschinenrahmens parallel ausgerichtet bleiben. Die Beibehaltung einer verkippten Position des Gelenkkopfs in der Gelenkpfanne ist nicht vorgesehen. Nachteilig an dieser Ausgleichsvorrichtung ist, dass der Gelenkkopf nicht gegen die Pfanne vorgespannt ist und somit zusätzliche Maßnahmen zum Abstützen und Führen der Formaufspannplatte erforderlich sind, damit die Form nicht abkippt. Beim Zufahren der Schließeinheit spielt die fehlende Vorspannung zwar keine Rolle. Für die Ausführung eines exakten Prägehubs ist es jedoch erforderlich, die Prägestartposition exakt anzufahren. Hierfür muss die bewegliche Formaufspannplatte kurz vor der Prägestartposition abgebremst werden. Aufgrund der fehlenden Vorspannung in dem Kalottenlager rutscht die bewegliche Formaufspannplatte aufgrund der Massenträgheit etwas nach vorn und zwar um den für die Kippbewegung vorgesehenen Spalt zwischen dem Ringflansch und dem Gelenkkopf. Aufgrund dieses Spiels ist kein exakter Prägehub einstellbar, so dass diese Einrichtung für das Spritzprägen wenig geeignet ist.

Aus der JP-A-10217302 ist eine weitere holmlose Formschließeinrichtung bekannt, bei der zwischen der Kolbenstange des Arbeitszylinders und der beweglichen Formaufspannplatte ein als Kalottenlager ausgebildetes Gelenk vorgesehen ist. Der sphärische (konvexe) Gelenkkopf der Kolbenstange liegt in einer konkaven Gelenkpfanne, die an der beweglichen Formaufspannplatte befestigt ist. In der Gelenkpfanne sind dem Gelenkkopf zugewandte Ausnehmungen vorgesehen, in die Hydrauliköl eingeleitet werden kann. Oberhalb und unterhalb des Kalottenlagers sind der Gelenkkopf und die Gelenkpfanne mit Spannstangen miteinander verbunden. Mittels der Spannstangen und dem Druck des Hydrauliköls in den Ausnehmungen und im Spalt zwischen Gelenkkopf und Gelenkpfanne kann der Gelenkkopf gegen die Pfanne vorgespannt gehalten werden. Nachteilig hieran ist, dass die Vorspannkraft nur dann konstant ist, wenn die Kolbenstange in der Symmetrieachse liegt. Jegliches Drehen oder Verkippen im Kalottenlager führt zu einer Asyemmtrie in der Vorspannkraft.

Demgegenüber liegt der Erfindung die Aufgabe zugrunde, eine Vorrichtung zur Kompensation eines Winkelfehlers bei einer Schließeinheit einer Spritzgießmaschine anzugeben, bei der stets die gleiche Vorspannkraft auch bei einem Winkelversatz gegeben ist, die auch über längere Betriebszeiten exakt arbeitet und bei der außerdem großflächig zu beaufschlagende Druckkammern entbehrlich sind.

Die Lösung dieser Aufgabe erfolgt bei einer Vorrichtung gemäß dem Oberbegriff von Patentanspruch 1 mit den kennzeichnenden Merkmalen. Der wesentliche mit der Erfindung erzielte Vorteil liegt in der Aufrechterhaltung einer weitgehend konstanten Vorspannkraft auch bei Verkippungen. In vorteilhafter Weiterentwicklung sind die Vorspannmittel für die Formträgerplatte mit kalottenartigen Andrückstücken ausgestattet, die in passenden Vertiefungen liegen (Unteransprüche 2 und 3) und beide Elemente zusammen liegen in der bevorzugten Ausführungsform mit der Lagerfläche 33 des Kalottenlagers auf dem gleichen Radius.

Die Ausgestaltung mit einem axial verschiebbaren und auf einen vorgebbaren Prägehub einstellbaren Zentrierring gemäß den Unteransprüchen 9 und 10 ist speziell für das Spritzprägen geeignet, bei dem plastifizierter Kunststoff in eine gegenüber der eigentlichen Formteilgröße vorvergrößerte Kavität eingespritzt wird und die Kavität durch Ausführung eines Prägehubs auf die eigentliche Formteilgröße reduziert wird.

Nachfolgend soll die Erfindung anhand eines Ausführungsbeispiels und unter Bezugnahme auf die Figuren 1 bis 7 näher erläutert werden. Es zeigen:
- Fig.1: Längsschnitt durch eine erfindungsgemäße Ausgleichsvorrichtung;
- Fig.2: Vergrößerte Darstellung des Ausschnitts X aus Figur 1;
- Fig.3: Draufsicht auf die Formträgerplatte aus Sicht des Pfeils A in Figur 1 (ohne Formträgerplatte);
- Fig.4: Draufsicht auf die bewegliche Seite der Schließeinheit bei geöffneter Schließeinheit aus Sicht des Pfeils B in Figur 1;
- Fig.5: Darstellung der Schließeinheit mit Winkelfehler im Längsschnitt;
- Fig.6: Darstellung der Schließeinheit mit Achsversatz im Längsschnitt;
- Fig.7: Zweite Ausführungsform eines Vorspannmittels,

Das nachfolgend näher beschriebene Ausführungsbeispiel betrifft das Gebiet der Herstellung hochwertiger planparalleler Spritzgussartikel wie insbesondere Substrate für CD, DVD, und dergleichen. Die Anwendung der Erfindung ist jedoch nicht auf dieses technische Gebiet beschränkt. Vielmehr kann die erfindungsgemäße Vorrichtung bei der Herstellung beliebiger Formteile und bei allen Arten von Spritzgießmaschinen eingesetzt werden, und zwar sowohl bei Spritzgießmaschinen mit an Holmen geführten Schließeinheiten als auch bei holmlosen Spritzgießmaschinen.

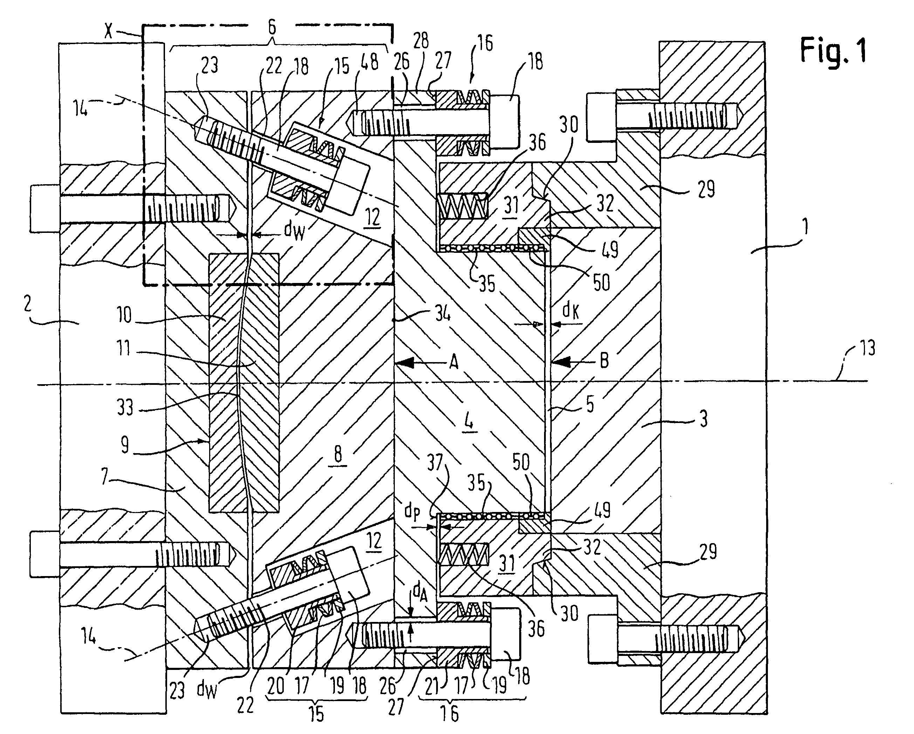

Gemäß den Figuren 1 bis 4 ist bei einer Spritzgießmaschine mit einer üblichen Schließeinheit zwischen einer festen Formaufspannplatte 1 und einer beweglichen Formaufspannplatte 2 ein Formwerkzeug (3,4) aufgespannt. Im geschlossenen Zustand - wie hier dargestellt - wird von den Formhälften 3 und 4 eine planparallele Kavität 5 mit dem Spaltmaß d_{K} zum Ausformen von Substraten für optisch lesbare Datenträger gebildet. Zwischen der beweglichen Formaufspannplatte 2 und der dieser zugeordneten Formhälfte 4 ist ein Winkelausgleichselement 6 angeordnet. Die Grundplatte 7 dieses Winkelausgleichselements 6 ist auf der beweglichen Formaufspannplatte 2 festgeschraubt und mit der Formträgerplatte 8 über ein Kalottenlager 9 gelenkig verbunden, wobei die Pfanne 10 des Kalottenlagers in die Grundplatte 7 und die Kugel 11 des Kalottenlagers in die Formträgerplatte 8 eingelassen sind, und zwar dergestalt, dass zwischen Grundplatte und Formträgerplatte ein Spalt d_{w} gebildet wird, der eine Drehung der Grundplatte 7 gegenüber der Formträgerplatte 8 erlaubt. Die Kugel 11 und/oder die Pfanne 10 sind mit einer geeigneten Gleitschicht versehen. Mehrere Langlöcher 12 sind symmetrisch um und schräg zur Symmetrieachse 13 der Schließeinheit in der Formträgerplatte 8 vorgesehen, wobei sich die Längsachsen 14 der Langlöcher 12 alle in einem Punkt auf der Symmetrieachse 13 der Schließeinheit schneiden. Die Langlöcher dienen zur Aufnahme der Federelemente 15, mit denen die Formträgerplatte 8 gegen die Grundplatte 7 vorgespannt wird. Jedes Federelement 15 besteht aus einem Federpaket 17, das mittels einer Schraube 18 und einer Beilagscheibe 19 gegen Andrückelemente 20 gepresst wird. Die Schrauben 18 gehen durch Bohrungen 22 in der Formträgerplatte 8 hindurch und sind in passenden Gewindebohrungen 23 in der Grundplatte 7 eingeschraubt. Der Durchmesser der Bohrungen 22 ist etwas größer als der Durchmesser der Schrauben 18 und der Durchmesser der Langlöcher 12 ist etwas größer als der Außendurchmesser der Federpakte 17, so dass die Formträgerplatte 8 relativ zur Grundplatte 7 über die Kugel 11 in der Pfanne 10 geringfügig um die Spaltbreite d_{w} verdrehbar ist.

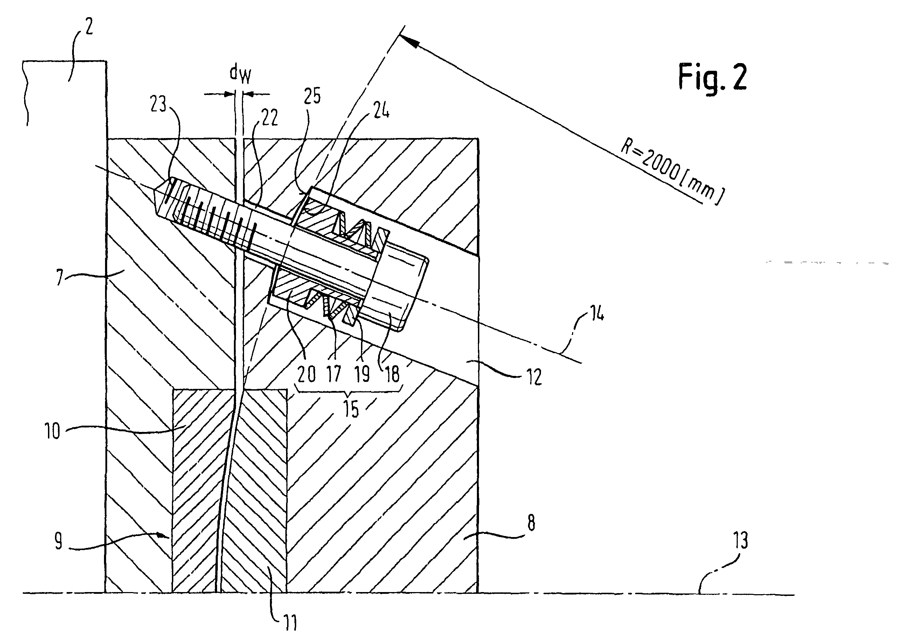

Wie aus der vergrößerten Darstellung gemäß Figur 2 zu sehen ist, ist das dem Federpaket 17 abgewandte Ende des Andrückelements 20 mit einer kalottenartigen Oberfläche 24 ausgebildet. Der Boden des Langlochs 12 weist eine passende kalottenartige Vertiefung 25 auf, deren Radius im wesentlichen gleich groß ist wie der Radius der kalottenartigen Oberfläche 24 des Andrückelements 20. In weiterer Ausgestaltung der Erfindung ist vorgesehen, dass die Radien von Kalottenlager 9, Oberfläche 24 und Vertiefung 25 im wesentlichen gleich groß sind. In vorteilhafter Ausgestaltung der Erfindung sind sämtliche Radien genau gleich groß.

Erfindungsgemäß liegen die kalottenartigen Andrückelemente 20 und die Kugel 11 des Kalottenlagers 9 im wesentlichen auf parallel zueinander liegenden Kalotten, vorzugsweise auf der gleichen Kalotte. Damit wird eine gleichmäßige Vorspannkraft selbst bei einer winkelversatzbedingten Schwenkbewegung der Formträgerplatte 8 sichergestellt. Im vorliegenden Ausführungsbeispiel liegen die kalottenartigen Andrückstücke 20, die Vertiefung 25 im Langloch 12, sowie die Kugel 11 und die Pfanne 10 des Kalottenlagers 9 alle auf derselben Kalotte mit einem Radius von R=2000 mm.

Zusätzlich zu dem erfindungsgemäßen Ausgleich des Winkelfehlers kann der Ausgleich eines Achsversatzes vorgesehen werden, wozu die Formhälfte 4 beispielsweise in der nachfolgend beschriebenen Art und Weise gegenüber der Formträgerplatte 8 verschiebbar ausgeführt ist. Für die Befestigung der Formhälfte 4 auf der Formträgerplatte 8 sind weitere Federelemente 16 der oben beschriebenen Art symmetrisch um die Formhälfte 4 verteilt vorgesehen, wobei jedoch die einzelnen Bestandteile (Federpaket 17, Schraube 18, Beilagscheibe 19 und Andrückelement 21) anders ausgelegt werden können; insbesondere das Andrückelement 21 weist eine plane Andrückfläche 27 auf. Im Außenbereich 28 der Formhälfte 4 sind Bohrungen 26 symmetrisch über den Umfang vorgesehen, durch die die Schrauben 18 gehen und in passende Gewindebohrungen in der Formträgerplatte 8 eingeschraubt sind. Der Durchmesser der Bohrungen 26 ist um ein Spaltmaß 2d_{A} größer als der Durchmesser der Schrauben 18, damit sich die Formhälfte 4 gegenüber der Formträgerplatte 8 verschieben kann, um einen Achsversatz zwischen den Formhälften 4 und 3 auszugleichen. Die Trennebene 34 zwischen der Formträgerplatte 8 und der Formhälfte 4 ist mit einer geeigneten Gleitschicht versehen, so dass auf zusätzliche separate Gleitmittel verzichtet werden kann und dennoch ein problemloses Verschieben zwischen der Formträgerplatte 8 und der auf ihr vorgespannten Formhälfte 4 gesichert ist.

Es kann weiterhin vorgesehen werden, die erfindungsgemäße Vorrichtung zur Winkelkompensation mit einer Einrichtung zu kombinieren, die bei einem Winkelfehler und gegebenenfalls bei einem Achsversatz ein automatisches Nachzentrieren ermöglicht. Hierzu ist auf die Formhälfte 3 ein erster Zentrierring 29 aufgezogen, in dessen konusförmige Vertiefung 30 ein passender Zentrierkonus 32 eines zweiten auf der bewegliche Formhälfte 4 aufgezogenen Zentrierrings 31 eintauchen kann. Damit wird eine automatische Kompensation eines Winkelfehlers (und gegebenenfalls eines Achsversatzes) sichergestellt. Bei einer Unparallelität von beweglicher und fester Formaufspannplatte wird die Form (3,4) durch das Zusammenspiel von Zentrierkonus 32 und konusförmiger Vertiefung 30 automatisch in der Trennebene 33 ausgerichtet, wobei sich die Kugel 11 in der Pfanne 10 in eine exakte Position dreht, in der der Zentrierkonus 32 exakt in der Vertiefung 30 sitzt. Das Spaltmaß d_{K} der Kavität 5 bleibt somit stets gleich. Durch die Vorspannung der Federpakete 17 auf die Andrückelemente 20 und 21 wird die Form 3,4 in der ausgerichteten Position gehalten, solange sich die Schließeinheit nicht verändert. Sollte sich während der Produktion der Zustand der Schließeinheit ändern, z.B. durch Verschleiß, wird bei einem Winkelversatz die Formträgerplatte 8 durch die Zentrierringe 29 und 31 automatisch neu ausgerichtet. Analog wird ein eventuell auftretender neuer Achsversatz mittels der ineinandergreifenden Zentrierringe 29 und 31 durch automatische Verschiebung der Formhälfte 4 gegenüber der Formträgerplatte 8 erneut kompensiert. Die Vorspannung der Federpakete 17 muss so eingestellt werden, dass die Aufreißkräfte der Form kleiner sind als die Vorspannkraft und dass der Zentrierkonus 32 in der Lage ist, die Form (3,4) in den Trennebenen 33 und 34 ohne Verschleiß zu verschieben.

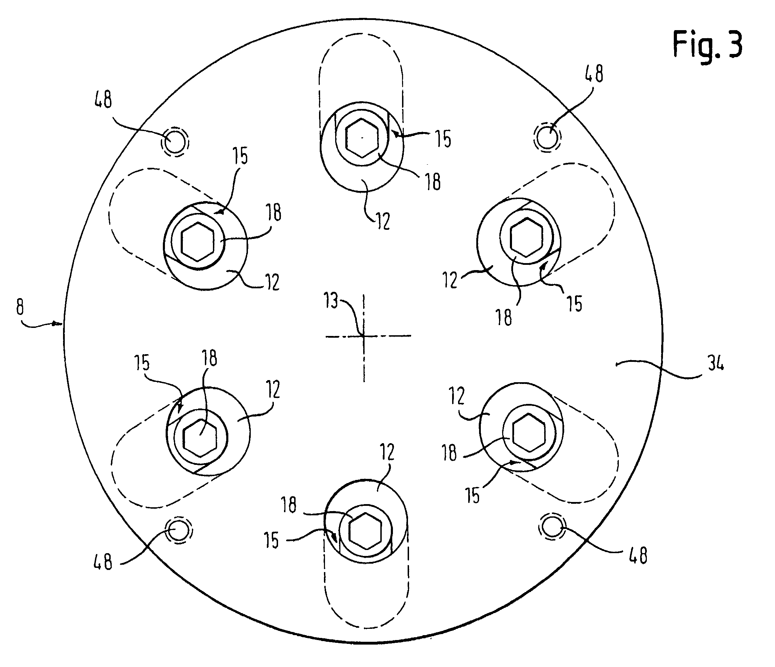

Figur 3 zeigt einen Schnitt in der Trennebene 34 und verdeutlicht die erfindungsgemäße Anordnung der Vorspannmittel, mit der die Formträgerplatte 8 gegen die Grundplatte 7 vorgespannt sind. Im vorliegenden Ausführungsbeispiel sind sechs Federelemente 15 symmetrisch um die Symmetrieachse 13 der Schließeinheit angeordnet. Die Langlöcher 12 sind schräg zur Symmetrieachse 13 nach außen verlaufend angeordnet und enden im Innern der Formträgerplatte 8. Weiterhin sind vier Gewindebohrungen 48 vorgesehen, in die die Schrauben 18 des zweiten Federelements 16 zum Vorspannen der Formhälfte 4 eingeschraubt werden können.

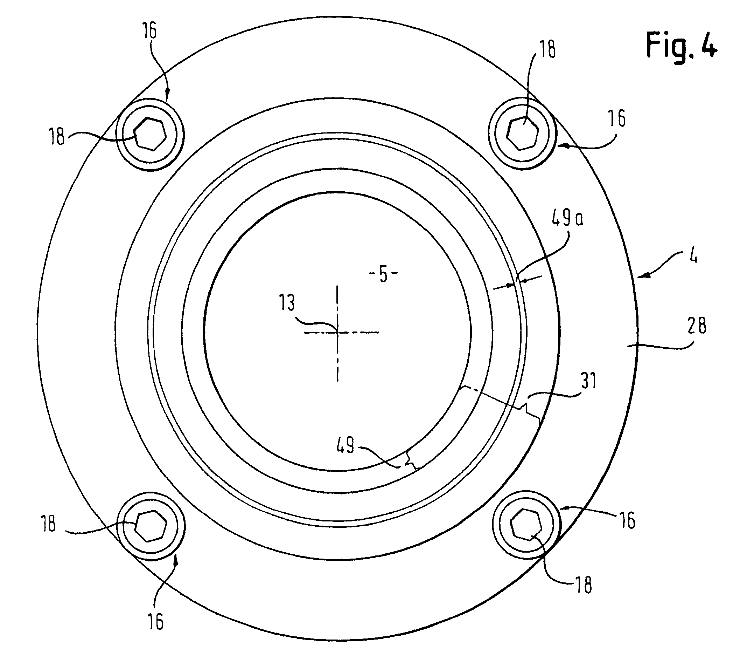

Figur 4 zeigt einen Schnitt durch die Formtrennebene und verdeutlicht die Anordnung der Vorspannmittel zweiter Art, mit der die bewegliche Formhälfte 4 gegen die Formträgerplatte 8 vorgespannt ist. Im vorliegenden Ausführungsbeispiel sind vier Federelemente 16 symmetrisch um die Symmetrieachse 13 der Schließeinheit angeordnet. Die Andrückelemente 21 mit einer ebenen Andrückfläche 27 werden mittels Federpaketen 17 gegen den Außenbereich 28 der Formhälfte 4 gepresst. Zur Einstellung der Federkraft gehen Schrauben 18 durch die Bohrungen 26 in dem Randbereich 28 der Formhälfte 4 und sind in passende Gewindebohrungen im Außenbereich der Formträgerplatte 8 eingeschraubt. Auf dem Zentrierring 31 mit dem Zentrierkonus 32, dessen projizierte Fläche 49a in Figur 4 zu sehen ist, sitzt im Bereich der Kavität 5 ein Formring 49 auf einem Kugelkäfig 50

Die Vorspannmittel unterscheiden sich hinsichtlich der Andrückstücke (kalottenartiges Andrückstück 20 versus ebenes Andrückstück 21). Aber auch die übrigen Bestandteile können individuell und den jeweiligen Bedürfnissen entsprechend ausgelegt sein, insbesondere können Federpakete mit unterschiedlicher Federkonstanten verwendet werden.

In weiterer Ausgestaltung der Erfindung soll ein Spritzprägevorgang mit einem exakt reproduzierbaren Prägehub ausgeführt werden können. Hierzu ist vorgesehen, den Zentrierring 31 mittels eines vorgespannten Kugelkäfigs 35 spielfrei auf der Formhälfte 4 axial verschiebbar zu lagern. Der Kugelkäfig 35 überträgt die zur Formausrichtung nötigen Querkräfte. Der Prägehub d_{P} wird über die Form (3,4) mittels Abstandshalter, beispielsweise mittels Hülsen geeigneter Länge, mechanisch fest eingestellt und mittels Federpaketen 36 wird der Zentrierring 31 in der durch die Abstandshalter vorgegebenen Position, nämlich im Abstand d_{P} von der Anschlagfläche 37 gehalten. Wenn sich die Formhälften soweit genähert haben, dass der Zentrierkonus 32 in die Vertiefung 30 des Zentrierrings 29 eintauchen kann, erfolgt zunächst eine Ausrichtung der Formhälften 3 und 4 zueinander. Hierzu ist es erforderlich, dass die Federkraft der Federpakte 36 größer ist als die zur Verstellung der beweglichen Formhälfte 4 erforderliche Kraft. Unmittelbar vor Ausführung des Prägehubs d_{P} befinden sich die Formhälften 3 und 4 im ausgerichteten Zustand, d.h. die Formhälften liegen absolut planparallel zueinander und die Symmetrieachsen der Formhälften 3 und 4 liegen absolut deckungsgleich. Anschließend wird die Schließeinheit um die Wegstrecke d_{P} zugefahren und die Federpakete 36 zusammengedrückt, bis der Zentrierring an der Anschlagfläche 37 anliegt. Die Kavität 5 ist somit bei Prägebeginn und während des gesamten Prägeprozesses absolut parallel, so dass das Formteil höchste Anforderung an die Planparallelität erfüllen kann. Das Spaltmaß d_{K} der Kavität zu Beginn des Prägehubs entspricht der Summe aus Formteildicke d_{F} und Prägehub d_{P}.

Durch geeignete Gleitschichten zwischen den vorgespannten und sich relativ zueinander bewegten Teilen wird sichergestellt, dass beim Eintauchen des Zentrierkonus 32 in die konusförmige Vertiefung 30 des Zentrierrings 29 diese Teile leicht in die ausgerichtete Position bewegt werden können. Daher sind die Kugel 11 und/oder die Pfanne 10 des Kalottenlagers mit einer Gleitschicht ausgestattet. Auch zwischen der Formträgerplatte 8 und der Formhälfte 4 ist eine Gleitschicht vorgesehen. Gegebenenfalls können auch die Andrückstücke 20, 21 der Vorspannmittel mit einer Gleitschicht versehen werden.

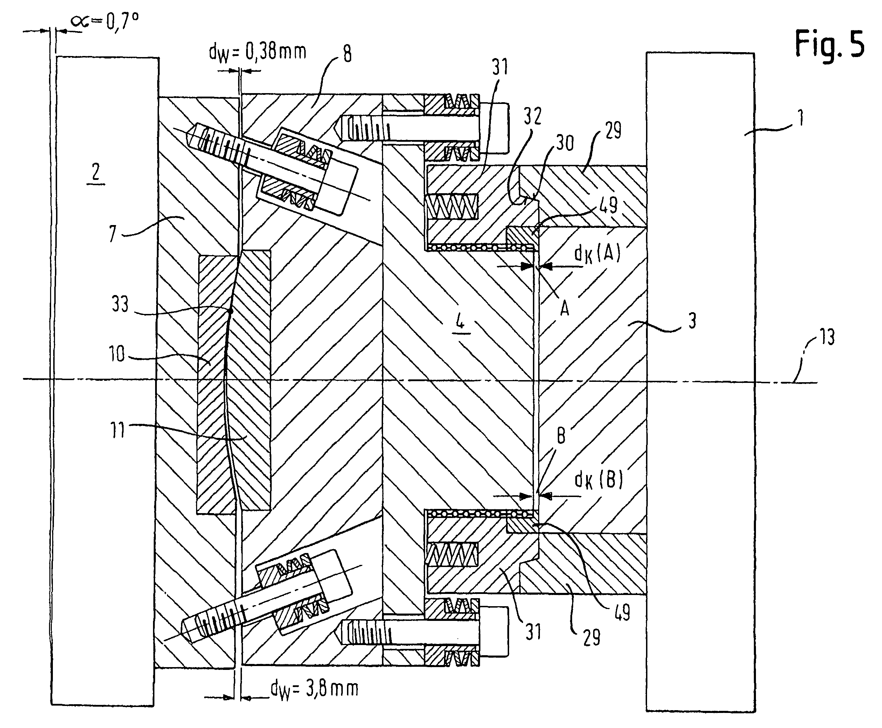

Figur 5 zeigt die Schließeinheit mit einem Winkelfehler. aber ohne Achsversatz. Die bewegliche Formaufspannplatte 2 ist um einen kleinen Winkel α aus der lotrechten Stellung verkippt. Damit ist auch die auf ihr aufgeschraubte Grundplatte 7 entsprechend verkippt. Durch den Schließvorgang und das Eintauchen des Zentrierkonus 32 in die konusförmige Vertiefung 30 ist die in die Formträgerplatte 8 eingelassene Kugel 11 in der Pfanne 10 so verdreht worden, dass die Formhälften 3 und 4 genau planparallel stehen. Die Formträgerplatte 8 und die auf ihr befestigte Formhälfte 4 sind also durch Drehung in der Trennebene 33 ausgerichtet worden. Dabei ist das Spaltmaß d_{W} auf der einen Seite auf 0,38 mm verkleinert und auf der anderen Seite auf 3,8 mm vergrößert worden. Das Kavitätenmaß d_{K} ist über die gesamte Breite der Kavität gleich geblieben, d.h. die Dicke der Kavität d_{K}(A) an der Position A ist identisch groß wie die Dicke der Kavität d_{K}(B) an der Position B.

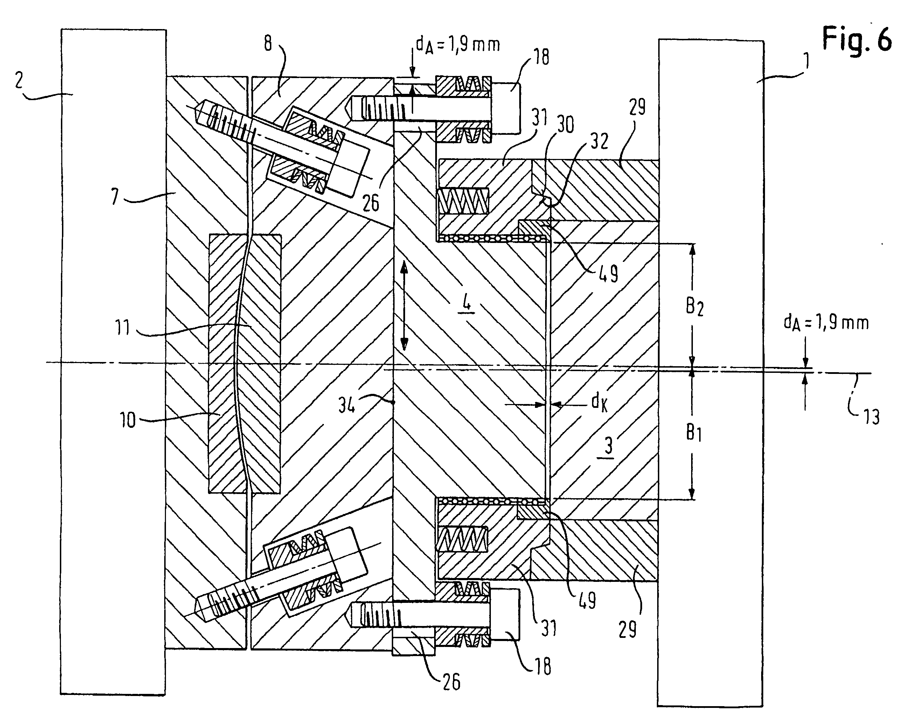

Figur 6 zeigt die Schließeinheit mit einem Achsversatz, aber ohne Winkelfehler. Die bewegliche Formaufspannplatte 2 ist zu Beginn der Schließbewegung um beispielsweise 1,9 mm aus der Symmetrieachse 13 versetzt. Beim Schließen taucht der Zentrierkonus 32 in die konusförmige Vertiefung 30 und verschiebt die Formhälfte 4 entlang der Trennebene 34 gegenüber der Formträgerplatte 8 um eben diesen Betrag. Die Schrauben 18 sitzen nun nicht mehr mittig in den Bohrungen 26 wie in Figur 1, sondern liegen fast am oberen Rand der Bohrungen 26 an.
Damit bleibt die Kavität gleich (B₁=B₂) und zwischen den Formhälften 3 und 4 gibt es keinen Mittenversatz.

Liegen sowohl ein Winkelfehler als auch ein Achsversatz vor, so werden beim Eintauchen des Zentrierkonus 32 in die konusförmige Vertiefung 30 in der Trennebene 33 eine Drehbewegung und gleichzeitig in der Trennebene 34 eine Parallelverschiebung bewirkt.

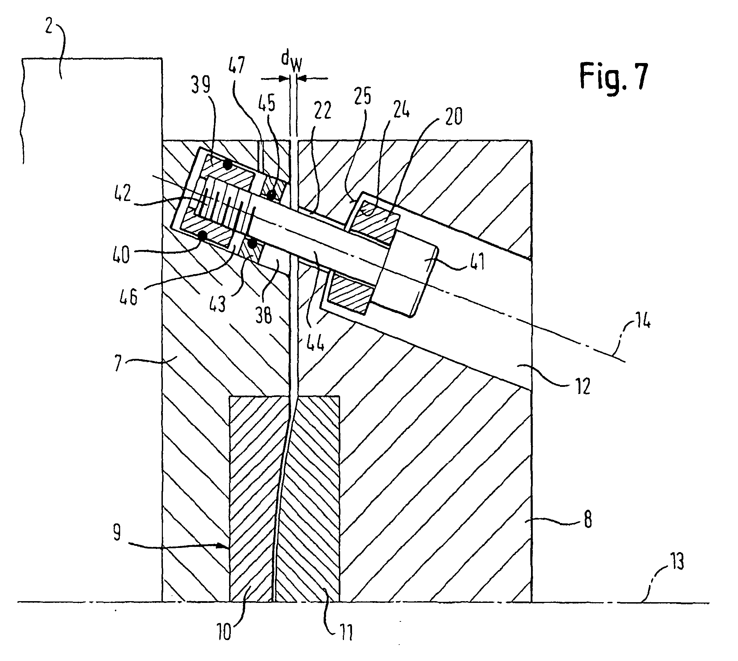

Figur 7 zeigt eine alternative Ausführungsform der Vorspannmittel mit einer kleinen hydraulisch oder pneumatisch beaufschlagbaren Kolben-Zylindereinheiten. Die Grundplatte 7 weist ein Langloch 38 auf, das koaxial zu dem Langloch 12 in der Formträgerplatte 8 liegt. Das Andrückelement 20 wird in dem Langloch 12 von einem Bolzen 41 gegen die Andrückfläche 25 gedrückt. Der Schaft 44 des Bolzens 41 geht durch die Bohrung 22, ragt in das Langloch 38 in der Grundplatte 7 und ist in einem das Langloch 38 abschließenden Ring 43 mittels eines oder mehrerer geeigneter Dichtringe 45 fluiddicht und verschiebbar gelagert. Auf das Fußstück 42 des Bolzens 41 ist ein Kolben 39 aufgeschraubt, der mittels einer oder mehrerer Dichtringe 40 dicht an der Innenwand des Langlochs 38 anliegt und darin reversierbar ist. Der Raum 46 zwischen dem Kolben 39 und dem Ring 43 kann über eine Leitung 47 mit einem Druckmedium beaufschlagt werden. Durch Einstellung eines geeigneten Drucks im Raum 46 wird der Bolzen 41 zusammen mit dem Andrückelement 20 mit der erforderlichen Vorspannkraft gegen die Andrückfläche 25 gedrückt.

### Bezugszeichenliste

- 1: feste Formaufspannplatte
- 2: bewegliche Formaufspannplatte
- 3: feste Formhälfte
- 4: bewegliche Formhälfte
- 5: Kavität
- 6: Ausgleichselement
- 7: Grundplatte
- 8: Formträgerplatte
- 9: Kalottenlager
- 10: Pfanne
- 11: Kugel
- 12: Langloch in Formträgerplatte 8
- 13: Symmetrieachse der Schließeinheit
- 14: Längsachse der Langlöcher
- 15: Federelement erster Art als Vorspannmittel erster Art
- 16: Federelement zweiter Art als Vorspannmittel zweiter Art
- 17: Federpaket
- 18: Schraube
- 19: Beilagscheibe
- 20: Andrückelement erster Art (kalottenartige Ausführung der Andrückfläche)
- 21: Andrückelement zweiter Art (ebene Ausführung der Andrückfläche)
- 22: Bohrung in Formträgerplatte 8
- 23: Gewindebohrung
- 24: Kalottenartige Oberfläche des Andrückelements 20
- 25: Kalottenartige Vertiefung im Boden des Langlochs 12
- 26: Bohrung im Außenbereich der Formhälfte 4
- 27: Plane Andrückfläche des Andrückelements 21
- 28: Außenbereich der Formhälfte 4
- 29: Erster Zentrierring
- 30: Konusförmige Vertiefung in erstem Zentrierung 29
- 31: Zweiter Zentrierring
- 32: Zentrierkonus des zweiten Zentrierrings 31
- 33: Erste Trennebene; für Winkelversatzkompensation
- 34: Zweite Trennebene; für Achsversatzkompensation
- 35: Kugelkäfig für Zentrierring 31
- 36: Federpakete des Zentrierrings 31
- 37: Anschlagfläche für Zentrierring 31 bei Spritzprägen
- 38: Langloch in Grundplatte 7
- 39: Kolben
- 40: Dichtring
- 41: Bolzen
- 42: Fußstück des Bolzens 41
- 43: Ring
- 44: Bolzenschaft
- 45: Dichtring
- 46: Druckbeaufschlagbarer Raum
- 47: Anschluss für Druckmedium
- 48: Gewindebohrung in Formträgerplatte 8
- 49: Formring
- 50: Kugelkäfig für Formring 49

## Patentansprüche

1. Vorrichtung zur Kompensation von Verkantungen bei Schließeinheiten von Spritzgießmaschinen mittels eines Kalottenlagers (9) und zugehörigen Vorspannmitteln (15),
**gekennzeichnet durch**,
eine auf einer der Formaufspannplatten (1, 2) befestigbaren Grundplatte (7) und eine Formträgerplatte (8) zur Aufnahme der dieser Formaufspannplatte (1, 2) zugeordneten Formhälfte (3,4), wobei die Formträgerplatte (8) gegenüber der Grundplatte (7) verkippbar ist, wobei die Grundplatte (7) mit der Formträgerplatte (8) über das Kalottenlager (9) verbunden und gegenüber der Formträgerplatte (8) mittels der Vorspannmittel (15) vorgespannt ist, derart, dass zwischen der Grundplatte (7) und der Formträgerplatte (8) außerhalb des Kalottenlagers (9) ein Spalt d_{W} gegeben ist, und wobei die Vorspannmittel (15) derart schräg zur Symmetrieachse (13) der Schließeinheit angeordnet sind, dass die von ihnen beaufschlagten Andrückfächen (25) und die Lagerfäche (33) des Kalottenlagers (9) im wesentlichen auf parallelen Kalotten, vorzugsweise auf der gleichen Kalotte liegen.

2. Ausgleichsvorrichtung nach Anspruch 1,
**dadurch gekennzeichnet,**
**dass** die Vorspannmittel (15) jeweils ein kalottenartiges Andrückstück (20) aufweisen.

3. Ausgleichsvorrichtung nach Anspruch 2,
**dadurch gekennzeichnet,**
**dass** in der Formträgerplatte kalottenartige Vertiefungen (25) als Andrückflächen (25) für die kalottenartigen Andrückstücke (20) vorgesehen sind.

4. Vorrichtung nach einem der Ansprüche 1 bis 3,
**dadurch gekennzeichnet,**
**dass** die Vorspannmittel (15) in Langlöchern (12) in der Formträgerplatte eingelassen sind.

5. Vorrichtung nach einem der Ansprüche 1 bis 4,
**dadurch gekennzeichnet,**
**dass** die Kugel (11) und/oder die Pfanne (10) des Kalottenlagers mit einer Gleitschicht ausgestattet sind.

6. Vorrichtung nach einem der Ansprüche 1 bis 5,
**dadurch gekennzeichnet,**
**dass** die kalottenartigen Andrückstücke (20) und/oder die kalottenartigen Vertiefungen (25) mit einer Gleitschicht ausgestattet sind.

7. Vorrichtung nach einem der Ansprüche 1 bis 6,
**dadurch gekennzeichnet,**
**dass** als Vorspannmittel Federelemente (15) vorgesehen sind, insbesondere Tellerfedern (17), Spiralfedern oder Gummifedern, die mit Haltemitteln (18), beispielsweise Schrauben, in der Grundplatte (7) befestigt sind, wobei die Haltemittel (18) durch Bohrungen (22) in der Formträgerplatte (8) hindurchgeführt und in der Grundplatte (7) befestigt sind, und wobei der Durchmesser der Bohrungen (22) etwas größer als der Durchmesser.der Haltemittel (18) ist.

8. Vorrichtung nach einem der Ansprüche 1 bis 7,
**dadurch gekennzeichnet,**
**dass** auf der einen Formhälfte (3) ein Zentrierring (29) mit einer konusartigen Vertiefung (30) und auf der anderen Formhälfte (4) ein Zentrierring (31) mit einem Zentrierkonus (32) passend zu der genannten Vertiefung (30) vorgesehen sind.

9. Vorrichtung nach Anspruch 8,
**dadurch gekennzeichnet,**
**dass** ein Zentrierung in axialer Richtung verschiebbar ausgebildet ist, beispielsweise durch einen auf die Formhälfte aufgezogenen Kugelkäfig.

10. Vorrichtung nach Anspruch 9,
**dadurch gekennzeichnet,**
**dass** der axial verschiebbare Zentrierring in axialer Richtung federnd gelagert ist.

## Claims

1. Device for compensating tilting in clamping units of injection moulding machines by means of a curved bearing (9) and associated prestressing means (15), **characterised by** a base plate (7) which can be secured to one of the mould clamping plates (1, 2) and a mould carrier plate (8) for mounting the mould half (3, 4) allocated to said mould clamping plate (1, 2), whereby the mould carrier plate (8) can be tilted relative to the base plate (7), whereby the base plate (7) is connected to the mould carrier plate (8) via the curved bearing (9) and prestressed relative to the mould carrier plate (8) by the prestressing means (15), in such a way that between the base plate (7) and the mould carrier plate (8) outside the curved bearing (9) there is a gap d_{W}, and whereby the prestressing means (15) are inclined to the axis of symmetry (13) of the clamping unit, so that the pressing surfaces (25) pressurised thereby and the bearing surface (33) of the curved bearing (9) are essentially on parallel curves, preferably on the same curve.

2. Compensating device according to claim 1, **characterised in that** the prestressing means (15) respectively comprise a curved pressing piece (20).

3. Compensating device according to claim 2, **characterised in that** in the mould carrier plate there are curved depressions (25) as pressing surfaces (25) for the curved pressing pieces (20).

4. Device according to one of claims 1 to 3, **characterised in that** the prestressing means (15) are inserted into longitudinal slots (12) in the mould carrier plate.

5. Device according to one of claims 1 to 4, **characterised in that** the spherical section (11) and/or the concave section (10) of the curved bearing are coated with a lubricant.

6. Device according to one of claims 1 to 5, **characterised in that** the curved pressing pieces (20) and/or the curved depressions (25) are coated with a lubricant.

7. Device according to one of claims 1 to 6, **characterised in that** spring elements (15) are provided as prestressing means, in particular disc springs (17), helical springs or rubber springs, which are secured in the base plate (7) by fastening means (18), for example screws, whereby the fastening means (18) are fed through bores (22) in the mould carrier plate (8) and secured in the base plate (7), and whereby the diameter of the bores (22) is slightly greater than the diameter of the fastening means (18).

8. Device according to one of claims 1 to 7, **characterised in that** on one mould half (3) there is a centring ring (29) with a conical depression (30) and on the other mould half (4) there is a centring ring (31) with a centring cone (32) fitting the said depression (30).

9. Device according to claim 8, **characterised in that** a centring ring is designed to be displaceable in axial direction, for example by a ball cage retainer fitted onto the mould half.

10. Device according to claim 9, **characterised in that** the axially displaceable centring ring is spring mounted in axial direction.

## Revendications

1. Dispositif de compensation de basculements dans le cas d'unités de fermeture de machines de moulage par injection au moyen d'un support à calotte (9) et de moyens de précontrainte associés (15),
**caractérisé par**
une plaque de base (7) fixée sur le plateau porte-outillage (1, 2) et une plaque de support de moule (8) destinée à recevoir le demi-moule (3, 4) associé à ce plateau porte-outillage (1, 2), la plaque de support de moule (8) pouvant basculer par rapport à la plaque de base (7), la plaque de base (7) étant reliée à la plaque de support de moule (8) par l'intermédiaire du support à calotte (9) et étant précontrainte par rapport à la plaque de support de moule (8) au moyen des moyens de précontrainte (15), de telle sorte qu'entre la plaque de base (7) et la plaque de support de moule (8), une fente d_{w} soit déterminée à l'extérieur du support à calotte (9), et les moyens de précontrainte (15) étant disposés de manière oblique à l'axe de symétrie (13) de l'unité de fermeture de telle sorte que les surfaces de pression (25) sollicitées par ceux-ci et la surface de support (33) du support à calotte (9) se situent sensiblement sur des calottes parallèles, de préférence sur la même calotte.

2. Dispositif de compensation selon la revendication 1,
**caractérisé en ce que**
les moyens de précontrainte (15) comprennent respectivement un élément de pression (20) du type calotte.

3. Dispositif de compensation selon la revendication 2,
**caractérisé en ce que**
des renfoncements (25) du type calotte dans la plaque de support de moule sont prévus comme surfaces de pression (25) pour les éléments de pression (20) du type calotte.

4. Dispositif selon l'une des revendications 1 à 3,
**caractérisé en ce que**
les moyens de précontrainte (15) sont encastrés dans des trous oblongs (12) dans la plaque de support de moule.

5. Dispositif selon l'une des revendications 1 à 4,
**caractérisé en ce que**
les billes (11) et/ou la poche de coulée (10) du support à calotte sont équipées d'une couche de glissement.

6. Dispositif selon l'une des revendications 1 à 5,
**caractérisé en ce que**
les éléments de pression (20) du type calotte et/ou les renfoncements (25) du type calotte sont équipés d'une couche de glissement.

7. Dispositif selon l'une des revendications 1 à 6,
**caractérisé en ce que**
des éléments formant ressort (15) sont prévus comme moyens de précontrainte, en particulier des rondelles Belleville (17), des ressorts en spirale ou des ressorts en caoutchouc, qui sont fixés dans la plaque de base (7) à l'aide de moyens de retenue (18), par exemple des vis, les moyens de retenue (18) traversant des alésages (22) dans la plaque de support de moule (8) et étant fixés dans la plaque de base (7), et le diamètre des alésages (22) étant sensiblement supérieur au diamètre des moyens de retenue (18).

8. Dispositif selon l'une des revendications 1 à 7,
**caractérisé en ce que**
il est prévu une bague de centrage (29) sur l'un des demi-moules (3), comprenant un renfoncement (30) du type cône et sur l'autre demi-moule (4) une bague de centrage (31) comprenant un cône de centrage (32) adapté au renfoncement (30) cité.

9. Dispositif selon la revendication 8,
**caractérisé en ce que**
une bague de centrage est conçue de façon mobile dans la direction axiale, par exemple par une cage à billes montée sur le demi-moule.

10. Dispositif selon la revendication 9,
**caractérisé en ce que**
la bague de centrage mobile dans le sens axial est logée de façon élastique dans la direction axiale.
